# EUROPÄISCHE PATENTSCHRIFT

(11) **EP 0 495 216 B1**
(45) Veröffentlichungstag und Bekanntmachung des Hinweises auf die Patenterteilung: **06.11.1996**
(21) Anmeldenummer: 91121631.5
(22) Anmeldetag: 17.12.1991
(51) Int. Cl.: G06K 19/077, G06K 19/07

(54) **Ausweiskarte mit einem Mikroprozessor**
Identity-card with a microprocessor
Carte d'identité avec un microprocesseur

(30) Priorität: 17.12.1990 DE 4040296
(43) Veröffentlichungstag der Anmeldung: 22.07.1992
(73) Patentinhaber: Orga Kartensysteme GmbH, 33104 Paderborn (DE)
(72) Erfinder: Blome, Rainer, W-4790 Paderborn-Elsen (DE); Deutschmann, Bernd, W-4790 Paderborn (DE); Freise, Ludwig, Dr., W-5300 Bonn (DE)
(74) Vertreter: Hanewinkel, Lorenz, Dipl.-Phys.

(56) Entgegenhaltungen:
- EP-A- 0 163 880
- EP-A- 0 262 036
- EP-A- 0 334 733
- DE-C- 3 804 361
- FR-A- 2 628 867
- US-A- 4 511 796
- PATENT ABSTRACTS OF JAPAN vol. 11, no. 5 (P-533)(2452) 8. Januar 1987 & JP-A-61 183 791

## Beschreibung

Die Erfindung betrifft eine Ausweiskarte mit Standardmäßigen Außenabmessungen mit einem Mikroprozessor (MP), der mit Kontaktflächen (C 1 bis C 8) elektrisch verbunden ist und zusammen mit diesen außermittig zur Ausweiskarte (SK) in einem rechteckigen, teilweise freigeschnittenen Chipkartenbereich (MK) an der Ausweiskarte (SK) einem vorgegebenen standard gemäß angeordnet ist.

Eine derartige Ausweiskarte ist aus der EP-A-0 163 880 bekannt, dessen chip- und kontakttragender Bereich von mehreren winkelförmigen Freischnitten umgeben ist, die einen rechteckförmigen Kartenbereich umgrenzen, der allseitig durch Verbindungsstege mit der größeren Ausweiskarte verbunden ist. In einer anderen Ausführung ist der chip- und kontakttragende Bereich in einer Ecke der Karte angeordnet, die zusammen mit einer zweiseitigen Perforation einen rechteckförmigen Kartenbereich umgibt.

Weiterhin ist eine Ausweiskarte mit einem Mikroprozessor aus der DE 38 04 361 C1 bekannt. Für die Auswertung der im Mikroprozessor enthaltenen Informationen gibt es weit verbreitet Geräte, die den Mikroprozessor an den genormt angeordneten Kontaktstellen kontaktieren. Weiterhin sind kartenförmige Miniaturträger mit einem Mikroprozessor bekannt, zu deren Auswertung spezielle Vorrichtungen zunehmende Verbreitung finden. Ein derartiger Miniaturträger ist in einem Freischnitt in die Standardkarte eingesetzt. Um dem separat hergestellten Miniaturträger einen Halt zu bieten, sind die einander haltenden Kanten der Ausweiskarte und des Miniaturträgers nach Art einer Nut-Federverbindung ausgestaltet, was insbesondere für die Nutausbildung einen hohen Herstellungsaufwand erbringt. Darüber hinaus ist das Material der Freistanzung verloren.

Es ist Aufgabe der Erfindung, eine Standardkarte mit einer Miniaturchipträgerkarte der eingangs genannten Art zu offenbaren, die eng toleriert einstückig und einfacher herstellbar und leichter aus der größeren Standardkarte auslösbar ist.

Die Lösung besteht darin, daß der Chipkartenbereich als Miniaturchipträger ausgebildet ist, der entlang drei seiner Seitenkanten vollständig freigeschnitten und entlang seiner vierten Seitenkante über eine geradlinig verlaufende Kerbe mit dem den Chipkartenbereich umgebenden Teil der Ausweiskarte verbunden ist, derart daß die Kerbe einen Scharniersteg für den Miniaturchipträger bildet.

Vorteilhafte Ausgestaltungen sind in den Unteransprüchen angegeben.

Die Standardkarte weist die Abmessungen 85,6 mm x 54 mm auf und hat eine stirnseitige und eine längsseitige Bezugskante bezüglich derer die Kontakte des Mikroprozessors in vorgegebener Verteilung angeordnet sind. Diese gleiche Kontaktverteilung ist für die Miniaturträgerkarte vorgesehen, die die Außenabmessungen von 25 mm x 15 mm aufweist, und zu deren je einer Längs-, und Querseite die Kontaktanordnung ausgerichtet angeordnet ist. Diese beiden Bezugskanten und eine weitere Kante sind vollständig freigeschnitten, wobei der Freischnitt sich vorteilhaft auch um die Ecken zur vierten Seite herum erstreckt. Die vierte Seite ist vorzugsweise beidseitig gekerbt, so daß ein Scharniersteg entsteht, der auch als Abreißsteg dienen kann.

Diese neuartige Anordnung einer Miniaturträgerkarte als Teil einer Standardträgerkarte läßt beide Kartenarten auf der gleichen Herstellvorrichtung mit dem Mikroprozessor und weiteren üblichen Datenträgern, z. B. einem Druckfeld, einem Bild und/oder einem Magnetstreifen, versehen. Außerdem läßt sich diese kombinierte Karte je nach Art der gegebenen Anwendungsvorrichtung als die Standardkarte verwenden oder als am Scharnier herausgeschwenkte Miniaturkarte in eine Miniaturkartenverarbeitungsvorrichtung einführen oder auch abgetrennt darin einsetzen.

Der Freischnitt ist vorteilhaft weiter als die Kartendicke freigestanzt, so daß die Miniaturkarte leicht herausgeschwenkt werden kann und deren Bezugskanten glatte Konturen aufweisen.

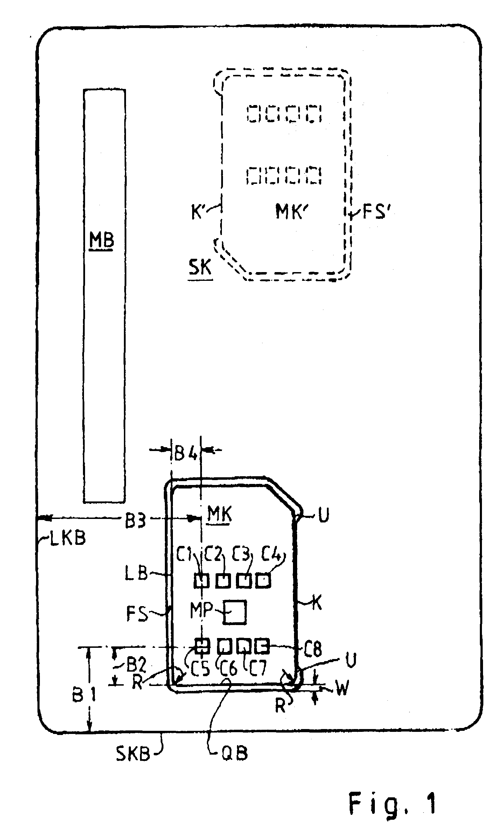

Fig. 1 zeigt eine bevorzugte Ausführung der Karte.

Die Standardkarte (SK) besteht üblich aus bedrucktem Kunststoffmaterial von beispielsweise 0,76 mm Stärke und hat abgerundete Ecken.

Auf die eine Stirnkante (SKB) und die eine Längskante (LKB), die als Bezugskanten dienen, hin orientiert sind die Kontaktflächen (C1 - C8) eines Mikroprozessors (MP) angeordnet, der in die Karte eingelagert und/oder auf dieser angeordnet ist. Um die Kontaktflächen (C1 - C8) und dem Mikroprozessor (MP) herum befindet sich ein mehr als dreiseitiger Freischnitt (FS), der in der Lage zu den Kontaktflächen (C1 - C8) mit einer Längs- und Querbezugskante (LB, QB) orientiert ist und formatmäßig eine Miniaturmikroprozessorkarte (MK) umgrenzt. Die vorgegebenen Abstandsmaße (B1 - B4) der Kontakte (C1 - C8) zu den Bezugskanten (SKB, LKB; LB, QB) sind dadurch sichergestellt, daß der Freischnitt (FS)) als eine Stanzung in einem auf die Bezugskanten (SKB, LKB) eng tolerierten Werkzeug ausgeführt ist.

Die Weite (W) des Freischnittes (FS) ist weiter als die Dicke des Kartenmaterials und beträgt vorzugsweise 1,2 mm. Der Freischnitt (FS) ist in den Ecken mit einem Radius von z. B. 1 mm abgerundet und ein kurzes Stück (U) über die Rundungen hinaus auf die ungetrennte Seite auslaufend ausgestaltet. Eine der Ecken ist abgeschrägt ausgebildet. Die zur Standardkarte hin verbundene Seite ist durchgehend mit einer geraden Kerbe (K) versehen. Vorzugsweise ist beidseitig, d.h. von oben und unten, übereinanderliegend je eine Kerbe (K) eingebracht, so daß ein Ausschwenken nach beiden Seiten möglich ist.

Ein Abtrennen des Miniaturträgers ist dadurch möglich, daß dieser wechselweise um annähernd 180° aus der Ebene der Standardkarte (SK) herausgeschwenkt wird, wodurch das Trennlinienmaterial ermüdet und bricht.

Die Anordnung des Miniaturträgers auf der größeren Standardkarte hat zusätzlich den Vorteil, daß während der Herstellung dieser beiden Teile diese eindeutig einander zugeordnet mit korrespondieren Daten versehen werden, wobei auf der großen Karte optisch mit dem Auge oder auch elektronisch lesbare Daten aufzudrucken sind sowie weitere Daten auf einem ggfls. vorhandenen Magnetstreifen (MB) aufzubringen oder ggfls. in einen weiteren elektronischen Speicher einzubringen sind. Nach einer Initialisierung und Trennung der beiden Teile können diese zur Sicherheit getrennt aufbewahrt werden und bei einer Anwendung einerseits als Schlüssel und andererseits als Prüfschlüssel benutzt werden, in dem deren darin gespeicherten oder aufgezeichneten Daten in einer Verarbeitungsvorrichtung aufgenommen und dort zur Datenent- oder Verschlüsselung zusammengeführt werden, wodurch ein einfaches Sicherungssystem zu verwirklichen ist.

Eine weitere Variante besteht darin, daß auf einer Standardkarte mehrere Miniaturmikroprozessorkarten (MK, MK') mit einem Freischnitt (FS, FS') und einer Kerbung (K, K') aufgebracht sind.

## Patentansprüche

1. Ausweiskarte mit Standardmäßigen Außenabmessungen mit einem Mikroprozessor (MP), der mit Kontaktflächen (C 1 bis C 8) elektrisch verbunden ist und zusammen mit diesen außermittig zur Ausweiskarte (SK) in einem rechteckigen, teilweise freigeschnittenen Chipkartenbereich (MK) an der Ausweiskarte (SK) einem vorgegebenen Standard gemäß angeordnet ist, dadurch gekennzeichnet, daß der Chipkartenbereich als Miniaturchipträger (MK) ausgebildet ist, der entlang drei seiner Seitenkanten (FS) vollständig freigeschnitten und entlang seiner vierten Seitenkante über eine geradlinig verlaufende Kerbe (K) mit dem den Chipkartenbereich umgebenden Teil der Ausweiskarte verbunden ist, derart daß die Kerbe einen Scharniersteg für den Miniaturchipträger (MK) bildet.

2. Ausweiskarte nach Anspruch 1, dadurch gekennzeichnet, daß der Freischnitt weiter als die Materialdicke der Ausweiskarte (SK) ist.

3. Ausweiskarte nach Anspruch 1 oder 2, dadurch gekennzeichnet, daß die Enden des Freischnittes (FS) zur vierten Seite hin ein relativ kurzes Stück herumgezogen sind.

4. Ausweiskarte nach Anspruch 3, dadurch gekennzeichnet, daß die Ecken des Freischnittes (FS) abgerundet sind und seine Enden etwas über die Rundungen hinaus in die vierte Seite hinein ragen.

5. Ausweiskarte nach Anspruch 1, dadurch gekennzeichnet, daß die Kerbe (K) von beiden Seiten der Ausweiskarte übereinanderliegend in die Ausweiskarte eingebracht ist.

6. Ausweiskarte nach einem der Ansprüche 1 bis 4, dadurch gekennzeichnet, daß auf ihr außerhalb des Freischnittes (FS) ein magnetischer und/oder optischer Datenträger (MB) angeordnet ist.

7. Ausweiskarte nach Anspruch 1, dadurch gekennzeichnet, daß auf der Ausweiskarte (SK) mindestens ein weiterer Mikroprozessor (MP') angeordnet ist, der mit seinen zugehörigen Kontaktflächen von einem weiteren dreiseitigen rechteckigen Freischnitt (FS') bezugskantenorientiert umgeben ist, zwischen dessen Enden geradlinig eine weitere Kerbe (K') sich erstreckt.

## Claims

1. Identity card with standard external dimensions, with a micro-processor (MP), which is electrically connected to contact surfaces (C1 to C8) and, together with them, is mounted off-centre on the identity card (SK), in accordance with a pre-set standard, in a rectangular, partially cut free chip card area (MK), distinguished by the fact that the chip card area takes the form of a miniature chip carrier (MK), which is cut completely free along three of its side edges (FS) and is connected to the part of the identity card surrounding the chip card area along its fourth side edge, through a slot which runs in a straight line (K), in such a way that the slot forms a hinged bridge for the miniature chip carrier (MK).

2. Identity card as Claim 1, distinguished by the fact that the free cut is wider than the material thickness of the identity card (SK).

3. Identity card as Claim 1 or 2, distinguished by the fact that the ends of the free cut (FS) have moved round a relatively short way onto the fourth side.

4. Identity card as Claim 3, distinguished by the fact that the corners of the free cut (FS) are rounded, and its ends project a short way beyond the rounded sections onto the fourth side.

5. Identity card as Claim 1, distinguished by the fact that one slot (K) each is provided on both sides of the identity card, the two slots being superimposed on each other.

6. Identity card as one of Claims 1 to 4, distinguished by the fact that a magnetic and / or optical data carrier (MB) is mounted on it outside the free cut (FS).

7. Identity card as Claim 1, distinguished by the fact that at least one additional micro-processor (MP') is mounted on the identity card (SK), which, with its associated contact surfaces, is surrounded by an additional three-sided rectangular free cut (FS'), orientated in relation to reference edges, between the ends of which an additional slot (K') extends in a straight line.

## Revendications

1. Carte d'identité de dimensions standard avec un microprocesseur (MP) relié électriquement à des surfaces de contact (C1 à C8) et disposé, avec celles-ci, excentriquement par rapport à la carte d'identité (SK), selon un standard prédéfini, dans une zone carte à puce (MK) rectangulaire, partiellement découpée,
caractérisée en ce que
la zone carte à puce est conçue sous forme de support de puce miniature qui est entièrement découpé le long de trois de ses bords latéraux (FS) et est relié, le long de son quatrième bord latéral, par l'intermédiaire d'une rainure rectiligne (K), avec la partie de la carte d'identité qui entoure la zone carte à puce de sorte que la rainure forme une charnière de support de puce miniature (MK).

2. Carte d'identité selon la revendication 1,
caractérisée en ce que
la découpe est plus large que l'épaisseur de la matière utilisée à la fabrication de la carte d'identité (SK).

3. Carte d'identité selon la revendication 1 ou 2,
caractérisée en ce que
les extrémités de la découpe (FS) sont légèrement présentent un prolongement de faible longueur en direction deu quatrième côté.

4. Carte d'identité selon la revendication 3,
caractérisée en ce que
les angles de la découpe (FS) sont arrondis et que ses extrémités font légèrement saillie sur le quatrième côté, au-delà des arrondissements.

5. Carte d'identité selon la revendication 1,
caractérisée en ce que
la rainure (K) est pratiquée de chaque côté de la carte d'identité, ces rainures étant superposées.

6. Carte d'identité selon l'une des revendications 1 à 4,
caractérisée en ce que
un support de données magnétique et/ou optique (MB) est disposé sur elle, en dehors de la découpe (FS).

7. Carte d'identité selon la revendication 1,
caractérisée en ce que
la carte d'identité (SK) est pourvue d'au moins un autre microprocessseur (MP'), qui, avec ses surfaces de contact afférents, est entouré d'une autre découpe rectangulaire, trilatérale (FS') s'orientant aux bords de référence et entre les extrémités de laquelle une autre rainure rectiligne (K') s'étend.
